# EUROPEAN PATENT APPLICATION

(11) **EP 3 816 130 A1**
(43) Date of publication of application: **05.05.2021**
(21) Application number: 19824694.4
(22) Date of filing: 03.06.2019
(51) Int. Cl.: C03C 27/12, B60J 1/00, B60S 1/02

(54) **LAMINATED GLASS FOR AUTOMOBILES**

(30) Priority: 28.06.2018 JP 2018123203
(71) Applicant: NIPPON SHEET GLASS COMPANY, LIMITED, Tokyo 108-6321 (JP)
(72) Inventor: OGAWA, Hisashi, Tokyo 108-6321 (JP)
(74) Representative: Mewburn Ellis LLP
(86) International application number: PCT/JP2019/021897
(87) International publication number: WO 2020/003902

(57) **Abstract**

Provided is a laminated glass for automobiles that includes an outer glass sheet; an inner glass sheet; an interlayer film; an electrical element; a power supply point that supplies power to the electrical element; and wiring. The outer glass sheet includes a first surface and a second surface on a vehicle inner side of the first surface. The inner glass sheet includes a third surface and a fourth surface on the vehicle inner side of the third surface. The interlayer film is disposed between the outer glass sheet and the inner glass sheet and joins together the second surface and the third surface. The electrical element and the power supply point are disposed on the second surface or inside the interlayer film at or near a peripheral edge portion of the second surface. The wiring is connected to the power supply point, is run out from the power supply point, is run out from the power supply point toward the third surface, and extends through the interlayer film.

## Description

### Technical Field

The present invention relates to a laminated glass for automobiles.

### Background Art

A typical laminated glass for automobiles includes an outer glass sheet, an inner glass sheet, and an interlayer film inserted between the two glass sheets. Such laminated glass is often installed with electrical elements, for example, a deicer heating element, an anti-fogging heating element, and an antenna element, on mainly the peripheral edge portion of the inner surface of the outer glass sheet. In such cases, one end of a harness connects to a power supply point that supplies power to the electrical elements, and the other end needs to run to a vehicle inner side to connect to a power source inside the vehicle. In Patent Literature 1, a configuration is described that allows an inner glass sheet and an interlayer film to not be an obstruction, the configuration including a portion of a peripheral edge portion of the inner glass sheet being cut out and the inner glass sheet and the interlayer film not being disposed at a position opposing the power supply point.

### Citation List

### Patent Literature

Patent Literature 1: JP 2012-39864

### Summary of Invention

### Technical Problem

A cutout portion in the inner glass sheet may cause poor adhesion of the interlayer film to the outer glass sheet and the inner glass sheet when temporarily adhered together. However, a configuration in which no cutout portion is provided in the inner glass sheet and the harness is run out from between the outer glass sheet and the interlayer film has reduced sealing properties between the outer glass sheet and the interlayer film. Specifically, water can enter from the gap between the outer glass sheet and the interlayer film where the harness runs, impairing the function of the electrical elements and/or the power supply point on the inner surface of the outer glass sheet.

Also, the electrical elements and the power supply point may be disposed inside the interlayer film rather than on the inner surface of the outer glass sheet. Typically, the electrical elements and the power supply point are disposed between two interlayer films before the interlayer films are adhered together. However, in such cases, when the harness extends from the power supply point toward the peripheral edge of the interlayer film and is run out from the inside of the interlayer film, a gap is formed around the harness inside the interlayer film. This also causes problems such as water entering the location of the electrical elements and/or the power supply point.

An object of the present invention is to provide a laminated glass for automobiles capable of minimizing or preventing water entering the location of an electrical element and/or a power supply point.

### Solution to Problem

A laminated glass for automobiles according to a first aspect of the present invention includes an outer glass sheet; an inner glass sheet; an interlayer film; an electrical element; a power supply point that supplies power to the electrical element; and wiring. The outer glass sheet includes a first surface and a second surface on a vehicle inner side of the first surface. The inner glass sheet includes a third surface and a fourth surface on the vehicle inner side of the third surface. The interlayer film is disposed between the outer glass sheet and the inner glass sheet and joins together the second surface and the third surface. The electrical element and the power supply point are disposed on the second surface or inside the interlayer film at or near a peripheral edge portion of the second surface. The wiring is connected to the power supply point, is run out from the power supply point toward the third surface, and extends through the interlayer film.

A laminated glass for automobiles according to a second aspect of the present invention is the laminated glass for automobiles according to the first aspect, wherein the wiring is a flat harness.

A laminated glass for automobiles according to a third aspect of the present invention is the laminated glass for automobiles according to the first or second aspect, wherein a shielding layer is formed in a peripheral edge portion of the second surface and/or the fourth surface, the interlayer film is in contact with the shielding layer, and the power supply point is disposed at least partially on the shielding layer.

A laminated glass for automobiles according to a fourth aspect of the present invention is the laminated glass for automobiles according to any one of the first to third aspects, wherein the wiring extends through the interlayer film, then continues between the third surface and the interlayer film, and is run out from between the third surface and the interlayer film.

A laminated glass for automobiles according to a fifth aspect of the present invention is the laminated glass for automobiles according to any one of the first to fourth aspects, wherein the wiring extends through the interlayer film at a distance from an edge surface of the interlayer film closest to the power supply point of 3 mm or greater.

A laminated glass for automobiles according to a sixth aspect of the present invention is the laminated glass for automobiles according to any one of the first to fifth aspects, wherein the electrical element includes at least one of a deicing heating element, an anti-fogging heating element, an antenna element, a light control body, or a light-emitting sheet.

A laminated glass for automobiles according to a seventh aspect of the present invention is the laminated glass for automobiles according to any one of the first to sixth aspects, wherein the power supply point and the wiring are connected using soldering and/or electrically conductive tape.

A laminated glass for automobiles according to an eighth aspect of the present invention is the laminated glass for automobiles according to any one of the first to seventh aspects, wherein the power supply point is formed from a material including at least one of Ag, Cu, Sn, Pb, or Bi.

A laminated glass for automobiles according to a ninth aspect of the present invention is the laminated glass for automobiles according to any one of the first to eighth aspects, wherein the wiring is fixed using a waterproof double-sided tape that extends continuously along the third surface, an edge surface between the third surface and the fourth surface, and the fourth surface.

A laminated glass for automobiles according to a tenth aspect of the present invention is the laminated glass for automobiles according to the ninth aspect, wherein a sum of a thickness of the wiring and a thickness of the waterproof double-sided tape is less than a thickness of the interlayer film at a portion in contact with the second surface and the third surface.

A method for manufacturing according to an eleventh aspect of the present invention is a method for manufacturing the laminated glass for automobiles according to any one of the first to tenth aspects, the method including the following:
- connecting the wiring to the power supply point disposed on the second surface;
- forming a hole in the interlayer film;
- running the wiring through the hole;
- aligning and layering the interlayer film on the outer glass sheet;
- attaching the wiring to the third surface using waterproof tape; and
- joining together the outer glass sheet and the inner glass sheet via the interlayer film.

A method for manufacturing according to a twelfth aspect of the present invention is a method for manufacturing a laminated glass for automobiles including an outer glass sheet including a first surface and a second surface on a vehicle inner side of the first surface; an inner glass sheet including a third surface and a fourth surface on the vehicle inner side of the third surface; an outer interlayer film and an inner interlayer film disposed between the outer glass sheet and the inner glass sheet in this order from the second surface toward the third surface, the outer interlayer film and the inner interlayer film joining together the second surface and the third surface; an electrical element sheet including an electrical element and a power supply point that supplies power to the electrical element, the electrical element sheet being disposed between the outer interlayer film and the inner interlayer film; and wiring connectable to the power supply point, the method including the following:
- aligning and layering together the outer glass sheet, the outer interlayer film, and the electrical element sheet in this order;
- connecting the wiring to the power supply point;
- forming a hole in the inner interlayer film;
- running the wiring through the hole;
- aligning and layering the inner interlayer film on the outer interlayer film;
- attaching the wiring to the third surface using waterproof tape; and
- joining together the outer glass sheet and the inner glass sheet via the outer interlayer film and the inner interlayer film.

### Advantageous Effects of Invention

According to the aspects described above of the present invention, in the laminated glass for automobiles, the electrical element and the power supply point that supplies power thereto are disposed on an inner surface (the second surface) of the outer glass sheet or inside the interlayer film. In either case, the wiring connectable to the power supply point extends out from the power supply point, through the interlayer film, and to the outer surface (the third surface) of the inner glass sheet. Accordingly, in the case in which the electrical element and the power supply point are disposed on the second surface, the wiring reducing the sealing properties between the second surface and the interlayer film can be prevented and water entering the location of the electrical element and/or the power supply point via the gap between the second surface and the interlayer film can be prevented. In other words, the route length from the section (the section that can be the origin of where water enters inside the laminated glass) where the wiring is run in the laminated glass to the heating element and/or the electrically conductive substrate can be ensured, decreasing the likelihood of water reaching the location of the heating element and/or the electrically conductive substrate. Alternatively, in the case in which the electrical element and the power supply point are disposed inside the interlayer film, water entering to location of the electrical element and/or the power supply point via the gap formed inside the interlayer film from the power supply point toward the peripheral edge of the interlayer film can be prevented. In other words, in either case, the route length from the origin of water entering to the electrical element and/or the power supply point can be ensured, decreasing the likelihood of water reaching the location of the heating element and/or the electrically conductive substrate.

### Brief Description of Drawings

FIG. 1 is a front view from a vehicle inner side of a laminated glass for automobiles according to a first embodiment.
FIG. 2 is a cross-sectional view taken along line II-II of FIG. 1.
FIG. 3 is a cross-sectional view taken along line III-III of FIG. 1.
FIG. 4 is a diagram for describing a method for manufacturing the laminated glass for automobiles according to the first embodiment.
FIG. 5 is a front view from a vehicle inner side of a laminated glass for automobiles according to a second embodiment.
FIG. 6 is a cross-sectional view taken along line VI-VI of FIG. 5.
FIG. 7 is a cross-sectional view taken along line VII-VII of FIG. 5.
FIG. 8 is a diagram for describing a method for manufacturing the laminated glass for automobiles according to the second embodiment.

### Description of Embodiments

A laminated glass for automobiles and a method for manufacturing the same according to some embodiments of the present invention will be described below with reference to the drawings.

### 1. First Embodiment

### 1-1. Configuration of Laminated Glass for Automobiles

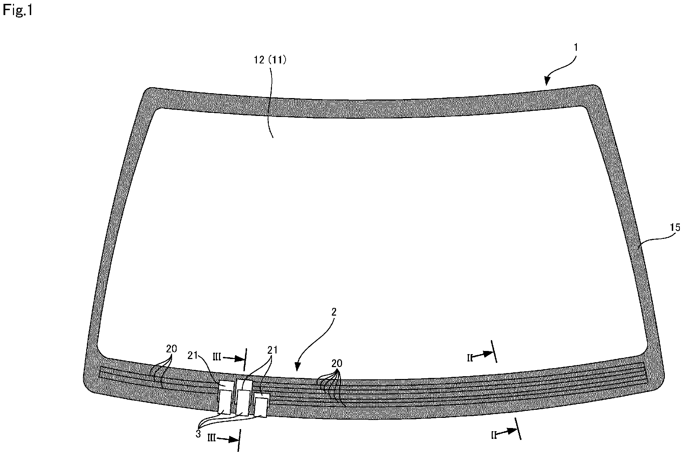

FIG. 1 is a front view illustrating a laminated glass for automobiles 1 according to the first embodiment. The laminated glass for automobiles (hereinafter, referred to simply as laminated glass) 1 is a window glass of an automobile and, in particular, is a windshield installed at the front. FIG. 1 is a diagram illustrating the laminated glass 1 as seen from a vehicle inner side. Note that hereinafter, unless otherwise stated, up and down are defined with respect to the state in which the laminated glass 1 is connected to the vehicle body, or, in other words, in reference to FIG. 1.

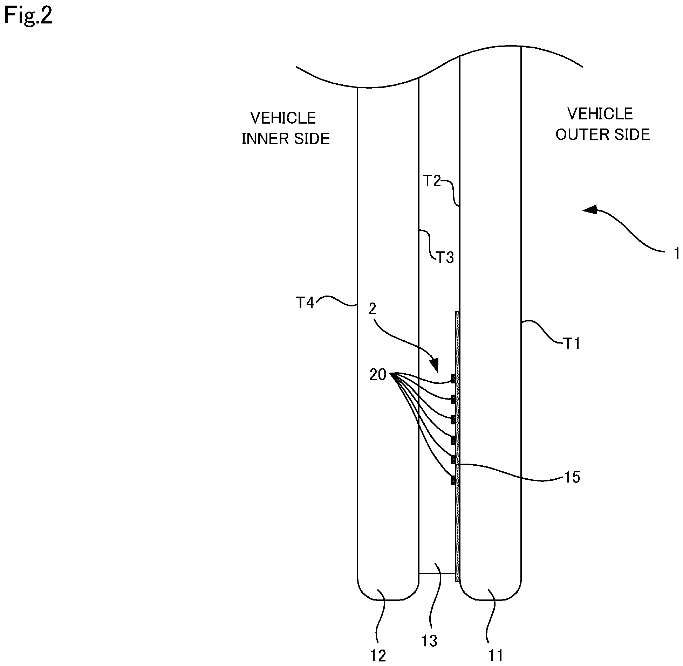

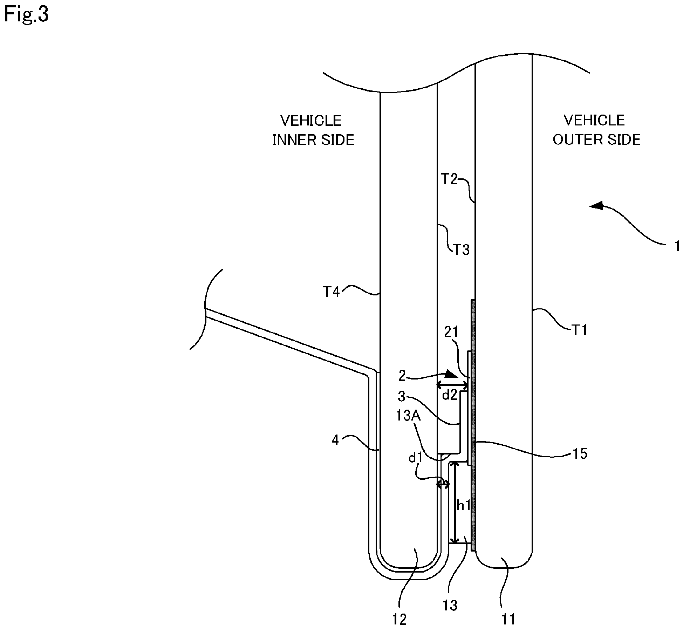

FIG. 2 is a cross-sectional view taken along line II-II of FIG. 1. FIG. 3 is a cross-sectional view taken along line III-III of FIG. 1. As illustrated in these diagrams, the laminated glass 1 includes an outer glass sheet 11, an inner glass sheet 12, and a resin interlayer film 13 disposed between the glass sheets. The interlayer film 13 can be made of polyvinyl butyral, for example, but is not limited thereto. Note that hereinafter, unless otherwise stated, outer side/outer/outward means the vehicle outer side and inner side/inner/inward means the vehicle inner side. Also, the outer surface of the outer glass sheet 11 is referred to as a first surface T1, the inner surface of the outer glass sheet 11 is referred to as a second surface T2, the inner surface of the inner glass sheet 12 is referred to as a third surface T3, and the outer surface of the inner glass sheet 12 is referred to as a fourth surface T4. The first surface T1 faces outside the vehicle, and the fourth surface T4 faces inside the vehicle. The second surface T2 and the third surface T3 face the interlayer film 13. The interlayer film 13 is adhered to the second surface T2 and the third surface T3 and adheres together the second surface T2 and the third surface T3, essentially filling in the gap between the second surface T2 and the third surface T3.

A dark opaque shielding layer 15 is formed on the second surface T2 of the outer glass sheet 11 in a band-like shape along the entire peripheral edge portion of the second surface T2. The shielding layer 15 is covered by the interlayer film 13 and is adhered to the interlayer film 13. The shielding layer 15 has the function of making the pressure-sensitive adhesive used to fix the laminated glass 1 to the pillar, i.e., window frame, of the vehicle body unable to be seen from outside the vehicle. The shielding layer 15 typically is made of glass powder or the like and is formed by screen printing a color ceramic paste, then drying and firing the product. Note that the shielding layer 15 is not limited to only being formed on the second surface T2, and, for example, the shielding layer 15 may be formed along the peripheral edge portion of the fourth surface T4 instead of or in addition to the second surface T2.

As illustrated in FIGS. 1 to 3, a deicer 2 is installed in the laminated glass 1. The deicer 2 is a device that supplies power to a heating element 20 disposed on the second surface T2 of the outer glass sheet 11 and heats the laminated glass 1 to melt ice, snow, and frost adhered to the wiper and/or the first surface T1 of the outer glass sheet 11. The wiper is an assembly for wiping off deposits (dirt) adhered to the first surface T1 that block the field of view of the driver, such as rain, snow, frost, mud, and the like.

The deicer 2 includes the heating element 20, which is an electrical element, as well as an electrically conductive substrate 21, which is a power supply point electrically connected to the heating element 20 that supplies the heating element 20 with power. In the present embodiment, the heating element 20 and the electrically conductive substrate 21 are disposed on the second surface T2 of the outer glass sheet 11 at or near the peripheral edge portion of the second surface T2, specifically, at or near the lower portion. To ensure that the field of view of the driver is not blocked and from an aesthetic perspective, the heating element 20 and the electrically conductive substrate 21 are disposed on the shielding layer 15. However, at least a portion of the heating element 20 and/or at least a portion of the electrically conductive substrate 21 may be disposed not overlapping the shielding layer 15. In the example illustrated in FIG. 1, a plurality of electrically conductive substrates 21 are provided. Typically, two or three are provided, but only a single one may also be provided. As illustrated in FIGS. 1 to 3, the outer glass sheet 11 and the inner glass sheet 12 include substantially flush edge surfaces at the lower portion where the deicer 2 is provided.

The heating element 20 of the present embodiment is implemented by a plurality of lead wires that extend from the electrically conductive substrate 21 and run along the entire lower portion of the shielding layer 15. Hereinafter, the lead wires are also given the reference number 20. The lead wires 20 form a plurality of closed loops together with the electrically conductive substrate 21. With the configuration described above, the deicer 2 can primarily heat the entire lower portion of the laminated glass 1, efficiently heat the park position of the wiper attached at or near the lower portion of the first surface T1 on the outside of the vehicle, and efficiently heat the wiper body.

As illustrated in FIG. 3, one end of a flat harness 3 is connected to the electrically conductive substrate 21. The flat harness 3 is a member including a foil-like metal body covered on the periphery by an insulator. The flat harness 3 has an overall planar shape. In the present embodiment, the electrically conductive substrate 21 and the metal body of the flat harness 3 are connected by soldering. This allows a reliable electrical connection between the two to be easily formed, the contact resistance at the connection portion to be decreased, and abnormal heat generation, sparking, and the like to be prevented. Note that instead of or in addition to soldering, the two may be connected using electrically conductive tape. From the perspective of stabilizing electrical conductivity, electrically conductive double-sided tape is more preferably used.

The material of the electrically conductive substrate 21 is not particularly limited, however preferable examples include members formed from at least one of Ag, Cu, Sn, Pb, or Bi. Members such as these have good adhesion with solder and thus are particularly excellent in the case in which the flat harness and the electrically conductive substrate 21 are fixed together via soldering.

Returning to FIG. 3, the flat harness 3 with one end connected to the electrically conductive substrate 21 extends out from the electrically conductive substrate 21, through the interlayer film 13, and to the third surface T3 of the inner glass sheet 12. Then, the flat harness 3 continues between the third surface T3 and the interlayer film 13 and is run out from between the third surface T3 and the interlayer film 13.

Specifically, a hole 13A is formed in the interlayer film 13 that extends through the interlayer film 13 in a direction substantially perpendicular to the second surface T2. The hole 13A is formed at a position opposing the portion where the flat harness 3 and the electrically conductive substrate 21 are connected. The flat harness 3 extends up from the electrically conductive substrate 21, runs into the hole 13A, and extends through the interlayer film 13 from the second surface T2 toward the third surface T3. The hole 13A of the present embodiment is a slit shaped to correspond to the shape of the flat harness 3. Note that by joining together the outer glass sheet 11 and the inner glass sheet 12 via the interlayer film 13 described below, the gap between the surface defining the hole 13A and the outer surface of the flat harness 3 is substantially filled and the two are substantially adhered together.

The flat harness 3 extending out from the hole 13A continues straight downward along the third surface T3 of the inner glass sheet 12 and reaches the lower end of the third surface T3. Then, at the lower end, the flat harness 3 turns toward the fourth surface T4, continues toward the fourth surface T4 along the edge surface between the third surface T3 and the fourth surface T4, and reaches the lower end of the fourth surface T4. Next, the flat harness 3 extends straight upward along the fourth surface T4 to an appropriate position. Along the route of the flat harness 3 described above after leaving the hole 13A, the flat harness 3 is fixed to the surface (the third surface T3, the edge surface between the lower end of the third surface T3 and the lower end of the fourth surface T4, and the fourth surface T4) of the inner glass sheet 12 using waterproof tape 4. The waterproof tape 4 used here is double-sided waterproof tape, and the waterproof tape 4 is disposed between the flat harness 3 and the surface of the inner glass sheet 12. Also, from the perspective of more reliably preventing water from entering the location of the heating element 20 and the electrically conductive substrate 21, the waterproof tape 4 is preferably disposed continuously without gaps along the route described above.

By disconnecting the waterproof tape 4 from the fourth surface T4, the flat harness 3 can be separated from the fourth surface T4. This allows the flat harness 3 to be run freely toward a non-illustrated external power source and connected thereto. The flat harness 3 may supply electricity supplied from an external power source to the heating element 20 via the electrically conductive substrate 21.

Preferably, d1 < d2 holds true, where the sum of the thickness of the flat harness 3 and the waterproof tape 4 is set as d1, and the thickness of the interlayer film 13 is set as d2. Note that the thickness of the interlayer film 13 is affected by the presence of elements and changes, becoming thinner, at the locations where an element, such as the flat harness 3, the waterproof tape 4, the electrically conductive substrate 21, and the heating element 20, is provided. The thickness d2 is the thickness of the interlayer film 13 where the thickness is unchanged or, in other words, is the distance between the second surface T2 and the third surface T3. If d1 ≥ d2 holds true, this indicates that the interlayer film 13 is not present or substantially not present between the flat harness 3 and the outer glass sheet 11 and between the flat harness 3 and the inner glass sheet 12. In this case, bubbles made from the air ejected from between the flat harness 3 and the glass sheets 11 and 12 cannot be absorbed by the interlayer film 13 and remain. This may adversely affect the adhesion of the laminated glass 1. Also, if d1 is too great, the thickness of the entire laminated glass 1 may be too big in places. In this case, if a molding is attached to the peripheral edge portion of the laminated glass 1, the adhesion to the molding surrounding in the region where the flat harness 3 and the waterproof tape 4 are layered may be impaired. Also, the glass sheets 12 and 13 may break due to the pressure when temporarily adhering the interlayer film 13. Also, when the interlayer film 13 is temporarily adhered, excess portions of the interlayer film 13 may be pushed out due to the presence of elements at the locations where an element, such as the flat harness 3, the waterproof tape 4, the electrically conductive substrate 21, and the heating element 20, is provided. Thus, if d1 ≥ d2 holds true, the interlayer film 13 between the flat harness 3 and the outer glass sheet 11 may be pushed out when temporarily adhered, making adhesion between the flat harness 3 and the outer glass sheet 11 difficult. However, if d1 < d2 holds true, such problems can be prevented.

Also, the distance between the position where the flat harness 3 runs through the interlayer film 13 and the edge surface (in the present embodiment, the lower end surface of the interlayer film 13, also referred to as a reference edge surface hereinafter) of the interlayer film 13 closest to the electrically conductive substrate 21 is set as h1. Here, from the perspective of surely fixing the flat harness 3 within the interlayer film 13, h1 ≥ 3 mm preferably holds true, h1 ≥ 5 mm more preferably holds true, and h1 ≥ 8 mm even more preferably holds true. If the position where the flat harness 3 runs through the interlayer film 13 is too close to the reference edge surface, the adhesion area between the second surface T2 and the portion of the interlayer film 13 from the hole 13A the flat harness 3 is run into to the reference edge surface is reduced. This reduces the sealing properties between the outer glass sheet 11 and the interlayer film 13 and thus increases the likelihood of water entering the location of the electrically conductive substrate 21 and the heating element 20 from the gap between the outer glass sheet 11 and the interlayer film 13. Also, when the flat harness 3 is run into the hole 13A, the portion of the interlayer film 13 from the hole 13A to the reference edge surface may separate from the other portions. Thus, from the perspective of that described above, h1 is preferably set satisfying the numerical range described above. Note that the position where the flat harness 3 runs through the interlayer film 13 is the position along the route of the flat harness 3 within the interlayer film 13 where the flat harness 3 is closest to the reference edge surface.

According to that described above, for supplying power to the electrically conductive substrate 21 on the second surface T2 from the external power source, the flat harness 3 first extends from the electrically conductive substrate 21 through the interlayer film 13 in the thickness direction, and is not run out from between the second surface T2 and the interlayer film 13 along the second surface T2. Also, after exiting from the interlayer film 13, the flat harness 3 runs out from between the third surface T3 and the interlayer film 13, then run toward the external power source on the vehicle inner side. In other words, by providing the flat harness 3 in this manner, the sealing properties between the second surface T2 and the interlayer film 13 are not hindered and the second surface T2 and the interlayer film 13 can be reliably adhered together. In other words, the route length from the section where the flat harness 3 is run that can be the origin of where water enters inside the laminated glass 1 to the heating element 20 and/or the electrically conductive substrate 21 can be ensured, decreasing the likelihood of water reaching the location of the heating element 20 and/or the electrically conductive substrate 21. This prevents the functions of heating element 20 and/or the electrically conductive substrate 21 on the second surface T2 from being impaired by water entering through the gap between the second surface T2 and the interlayer film 13. Also, corrosion can be prevented at the portion where electrically conductive substrate 21 and the flat harness 3 are joined.

Also, in the case in which the flat harness 3 is run out from between the second surface T2 and the interlayer film 13, the flat harness 3 needs to be fixed to the second surface T2 as well as the inner glass sheet 12 using waterproof tape or the like. However, with the wiring method of the present embodiment, when the flat harness 3 is run out from between the third surface T3 and the interlayer film 13, the flat harness 3 only needs to be fixed to the smooth surface of the end portion of the inner glass sheet 12. Thus, the work is very easy to complete. Also, in the case in which the flat harness 3 is run out from between the second surface T2 and the interlayer film 13, the interlayer film 13, which is an elastic body, is pulled to the vehicle inner side by the flat harness 3. Thus, the adhesion between the interlayer film 13 and the second surface T2 is may be impaired. However, with the wiring method of the present embodiment, when the flat harness 3 is run out from between the third surface T3 and the interlayer film 13 and the fixed along the inner glass sheet 12, the problems relating to adhesion described above are unlikely to occur.

### 1-2. Manufacturing method

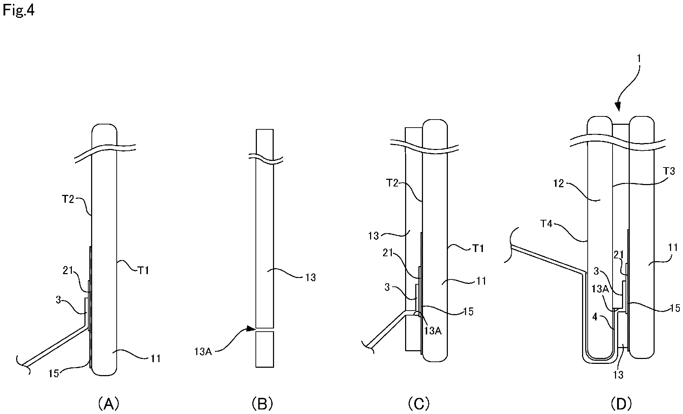

A method for manufacturing the laminated glass 1 described above will be described below with reference to FIG. 4. First, the outer glass sheet 11 is prepared by layering the shielding layer 15 on the second surface T2 along the peripheral edge portion, then layering the heating element 20 and the electrically conductive substrate 21 on the lower portion of the shielding layer 15. Then, the inner glass sheet 12 including a main surface shaped substantially the same as that of the outer glass sheet 11 and the sheet-shaped interlayer film 13 are prepared. The flat harness 3 is also prepared.

Next, as illustrated in FIG. 4A, one end of the flat harness 3 is connected to the electrically conductive substrate 21 of the outer glass sheet 11 by soldering. These may also be connected using electrically conductive tape as described above.

Also, as illustrated in FIG. 4B, the hole 13A is formed in the lower portion of the sheet-shaped interlayer film 13 at a position opposing the electrically conductive substrate 21 when the interlayer film 13 and the outer glass sheet 11 are aligned and layered together. The hole 13A is formed extending through the interlayer film 13 substantially parallel with the thickness direction of the interlayer film 13. The hole 13A is shaped as a slit, with the shape substantially matching the shape of a cross-section of the flat harness 3 taken along the direction orthogonal to the longitudinal direction.

Then, as illustrated in FIG. 4C, the other end of the flat harness 3, with the first end connected to the electrically conductive substrate 21, is run through the hole 13A in the interlayer film 13. Next, the sheet-shaped interlayer film 13 is aligned and layered on the second surface T2 of the outer glass sheet 11. Here, to ensure there is no slack in the flat harness 3 between the second surface T2 and the interlayer film 13, the flat harness 3 is pulled out from the hole 13A when the two are aligned and layered together. Also, the second surface T2 and the interlayer film 13 are aligned perfectly and layered together to help prevent a gap being formed between the two.

Next, as illustrated in FIG. 4D, the flat harness 3 exposed from the hole 13A of the interlayer film 13 is attached to the inner glass sheet 12 using the waterproof tape 4. Here, for example, the flat harness 3 exposed from the hole 13A of the interlayer film 13 is run along the surface of the interlayer film 13 toward the lower end of the interlayer film 13. Then, the waterproof tape 4, which is double-sided tape, is attached to the outer side of the flat harness 3 along the direction the flat harness 3 extends on the interlayer film 13. Here, the length of the waterproof tape 4 is adjusted so that the waterproof tape 4 extends just a predetermined distance from the lower end of the interlayer film 13 along the direction the flat harness 3 extends. In this state, the release paper of the waterproof tape 4 is peeled off and the adhering surface is exposed. Then, the inner glass sheet 12 is aligned and layered on the interlayer film 13. As a result, the third surface T3 and the flat harness 3 are adhered together via the waterproof tape 4. Thereafter, the flat harness 3 is run from the lower end of the third surface T3 toward the fourth surface T4 conforming to the edge surface and then run upward from the lower end of the fourth surface T4 conforming to the fourth surface T4. This adheres the flat harness 3 to the third surface T3, the edge surface between the third surface T3 and the fourth surface T4, and the fourth surface T4 via the waterproof tape 4.

Next, the outer glass sheet 11, the interlayer film 13, and the inner glass sheet 12 layered in this order are heated under increased pressure in an autoclave. In this way, the outer glass sheet 11 and the inner glass are joined together via the interlayer film 13, and the laminated glass 1 is manufactured. Note that before heating via the autoclave, the two glass sheets 11 and 12 are preferably pressed using a roller (a deaeration system such as vacuum back) or the like to temporarily adhere the two glass sheets 11 and 12 together while removing air between the two glass sheets 11 and 12 and the interlayer film 13.

### 2. Second Embodiment

### 2-1. Configuration of Laminated Glass for Automobiles

Next, a laminated glass for automobiles 101 according to the second embodiment will be described. The laminated glass 101 has the same configuration as the laminated glass 1 according to the first embodiment except that the heating element 20 and the electrically conductive substrate 21 are disposed inside the interlayer film 13. Hereinafter, elements in common with the first embodiment will be given the same reference number and descriptions thereof will be omitted. Only the differences with the first embodiment will be described.

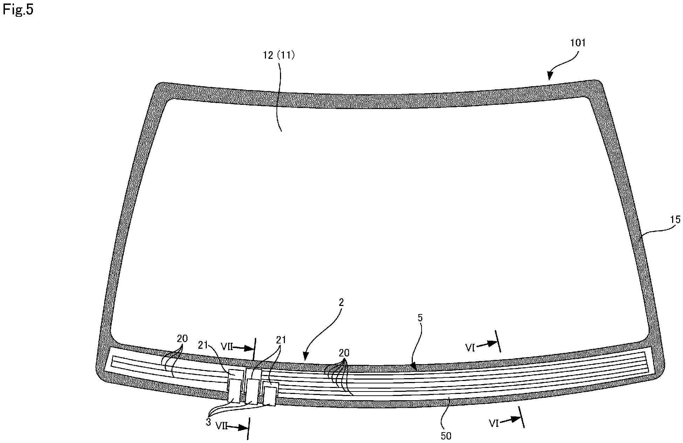

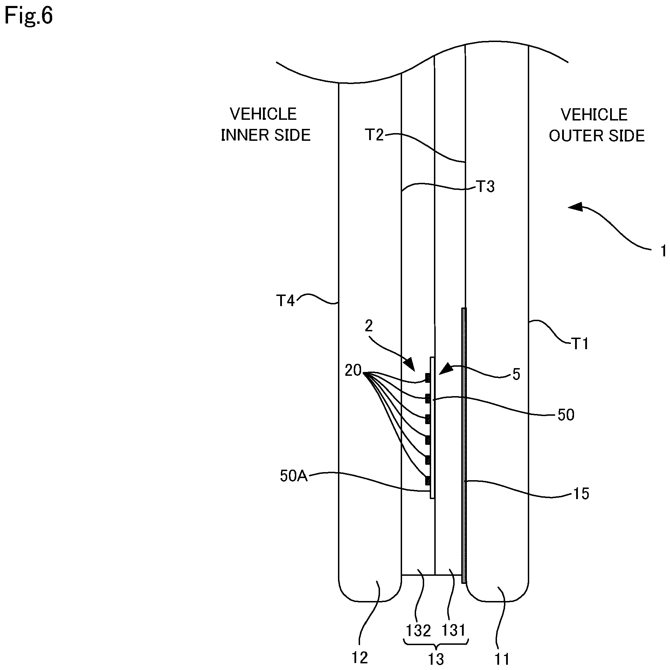

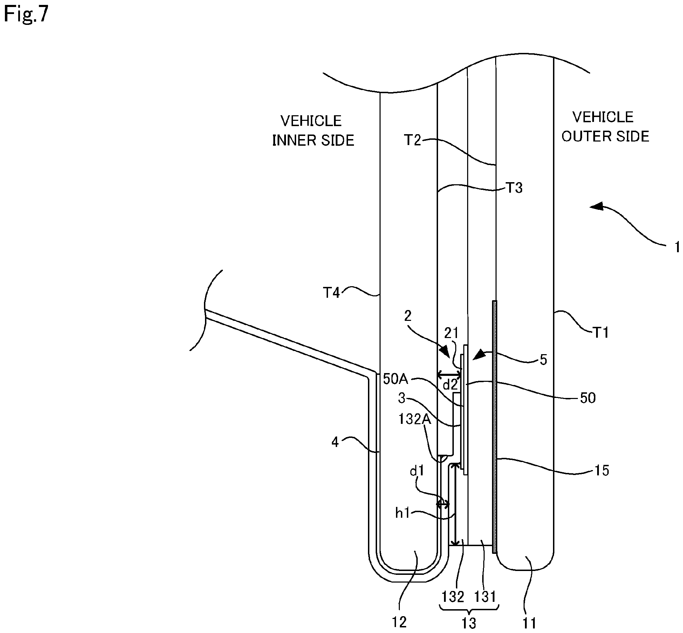

FIG. 5 is a front view of the laminated glass 101 from vehicle inner side. FIG. 6 is a cross-sectional view taken along line VI- VI of FIG. 5. FIG. 7 is a cross-sectional view taken along line VII-VII of FIG. 5.

As illustrated in FIGS. 6 and 7, the laminated glass 101 includes the interlayer film 13 with a multilayer structure including an outer interlayer film 131 and an inner interlayer film 132. The outer interlayer film 131 and the inner interlayer film 132 are disposed between the outer glass sheet 11 and the inner glass sheet 12 in this order from the second surface T2 toward the third surface T3. The outer interlayer film 131 is adhered to the second surface T2, and the inner interlayer film 132 is adhered to the third surface T3. Also, the interlayer films 131 and 132 are adhered together and adhere to the second surface T2 and the third surface T3, respectively, essentially filling in the gap between the second surface T2 and the third surface T3.

An electrical element sheet 5 is disposed on the adhering surface between the outer interlayer film 131 and the inner interlayer film 132. The electrical element sheet 5 includes a sheet material 50 made from insulating material such as PET and the heating element 20 and the electrically conductive substrate 21 disposed on the sheet material 50. The heating element 20 includes a plurality of lead wires as in the first embodiment and is connected to the electrically conductive substrate 21. Also similar to the first embodiment, one end of the flat harness 3 is connected to the electrically conductive substrate 21. Note that the electrical element sheet 5 may be omitted. In other words, in cases such as heated wire windshields, the heating element 20 and the electrically conductive substrate 21 may be installed directly between the outer interlayer film 131 and the inner interlayer film 132.

The heating element 20 and the electrically conductive substrate 21 are disposed on a surface 50A on one side of the sheet material 50. The electrical element sheet 5 is inserted between the outer interlayer film 131 and the inner interlayer film 132 with the sheet material 50 aligned substantially parallel with the first to fourth surfaces T1 to T4 and the surface 50A facing the third surface T3 of the inner glass sheet 12. The electrical element sheet 5 is disposed at a position overlapping the shielding layer 15 in a front view of the laminated glass 101.

As illustrated in FIG. 7, the flat harness 3 with one end connected to the electrically conductive substrate 21 on the outer interlayer film 131 extends out from the electrically conductive substrate 21, through the inner interlayer film 132, and to the third surface T3 of the inner glass sheet 12. Then, the flat harness 3 continues between the third surface T3 and the inner interlayer film 132 and is run out from between the third surface T3 and the inner interlayer film 132.

Specifically, a hole 132A is formed in the inner interlayer film 132 that extends through the inner interlayer film 132 in a direction substantially perpendicular to the second surface T2. The hole 132A is formed at a position opposing the portion where the flat harness 3 and the electrically conductive substrate 21 are connected. The flat harness 3 extends up from the electrically conductive substrate 21, runs into the hole 132A, and extends through the inner interlayer film 132 from the second surface T2 toward the third surface T3. The hole 132A of the present embodiment is also a slit shaped to correspond to the shape of the flat harness 3. Note that by joining together the outer glass sheet 11 and the inner glass sheet 12 via the interlayer film 13 described below, the gap between the surface defining the hole 132A and the outer surface of the flat harness 3 is substantially filled and the two are substantially adhered together.

The flat harness 3 extending out from the hole 132A is fixed to the inner glass sheet 12 using the waterproof tape 4 as in the first embodiment. The flat harness 3 is separated from the fourth surface T4 when the connection with the waterproof tape 4 ends, allowing the flat harness 3 to be run freely toward a non-illustrated external power source and connected thereto.

As in the first embodiment, preferably the relationship d1 < d2 holds true, where the sum of the thickness of the flat harness 3 and the waterproof tape 4 is set as d1, and the thickness of the interlayer film 13 (the total thickness of the thickness of the outer interlayer film 131 and the thickness of the inner interlayer film 132) is set as d2. Also, the distance h1 between the reference edge surface and the position where the flat harness 3 runs through the interlayer film 13 (in the present embodiment, the inner interlayer film 132) preferably satisfies the numerical range described in the first embodiment for reasons similar to that described in the first embodiment.

According to that described above, the flat harness 3 first extends from the electrically conductive substrate 21 disposed between the outer interlayer film 131 and the inner interlayer film 132 through the inner interlayer film 132 in the thickness direction, and is not run out from between the outer interlayer film 131 and the inner interlayer film 132. Also, after exiting from the inner interlayer film 132, the flat harness 3 runs out from between the third surface T3 and the interlayer film 13, then run toward the external power source on the vehicle inner side. In the case in which the flat harness 3 is run out from between the outer interlayer film 131 and the inner interlayer film 132, adhesion with the flat harness 3 is insufficient due to the properties of the interlayer films 131 and 132, such as surface roughness and rigidity. However, in the present embodiment in which the flat harness 3 is run out from the third surface T3, by providing the flat harness 3 in this manner, the sealing properties between the outer interlayer film 131 and the inner interlayer film 132 are not hindered and the two can be reliably adhered together. In other words, the route length from the origin of where water enters inside the laminated glass 101 to the heating element 20 and/or the electrically conductive substrate 21 can be ensured, decreasing the likelihood of water reaching the location of the heating element 20 and/or the electrically conductive substrate 21. This prevents the functions of heating element 20 and/or the electrically conductive substrate 21 disposed between the outer interlayer film 131 and the inner interlayer film 132 from being impaired by water entering through the gap between the outer interlayer film 131 and the inner interlayer film 132. Also, corrosion can be prevented at the portion where electrically conductive substrate 21 and the flat harness 3 are joined.

Also, in the case in which the flat harness 3 is run out from between the outer interlayer film 131 and the inner interlayer film 132, the interlayer film 13, which is an elastic body, is pulled to the vehicle inner side by the flat harness 3. Thus, the adhesion between the interlayer film 13 and the second surface T2 is may be impaired. However, with the wiring method of the present embodiment, when the flat harness 3 is run out from between the third surface T3 and the interlayer film 13 and the fixed along the inner glass sheet 12, the problems relating to adhesion described above are unlikely to occur. Also, the flat harness 3 only needs to be fixed to the smooth surface of the end portion of the inner glass sheet 12. Thus, the work is very easy to complete.

### 2-2. Manufacturing method

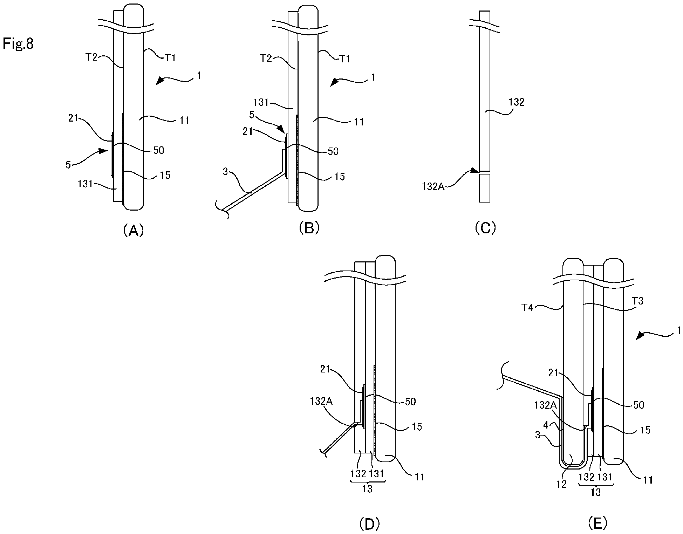

A method for manufacturing the laminated glass 101 described above will be described below with reference to FIG. 8. First, the outer glass sheet 11 layered with the shielding layer 15 on the second surface T2 along the peripheral edge portion and the inner glass sheet 12 including a main surface shaped substantially the same as that of the outer glass sheet 11 are prepared. Also, the sheet-shaped outer interlayer film 131 and the inner interlayer film 132 and the electrical element sheet 5 layered with the heating element 20 and the electrically conductive substrate 21 on the sheet material 50 are prepared. The flat harness 3 is also prepared.

Next, as illustrated in FIG. 8, the outer glass sheet 11, the outer interlayer film 131 and the electrical element sheet 5 are aligned and layered together in this order. Specifically, the outer interlayer film 131 is aligned and layered on the second surface T2 of the outer glass sheet 11, and the electrical element sheet 5 is aligned and layered on the externally-exposed outer interlayer film 131. The electrical element sheet 5 is disposed along the lower portion of the outer interlayer film 131 covering the lower portion of the shielding layer 15 of the outer glass sheet 11 in a front view.

Next, as illustrated in FIG. 8B, one end of the flat harness 3 is connected to the electrically conductive substrate 21 of the electrical element sheet 5 by soldering. These may also be connected using electrically conductive tape. Note that the electrical element sheet 5 may be aligned and layered on the outer interlayer film 131 after the flat harness 3 is connected to the electrically conductive substrate 21.

Also, as illustrated in FIG. 8C, the hole 132A is formed in the lower portion of the sheet-shaped inner interlayer film 132 at a position opposing the electrically conductive substrate 21 when the outer interlayer film 131 and the inner interlayer film 132 are aligned and layered together. The hole 132A is formed extending through the inner interlayer film 132 substantially parallel with the thickness direction of the inner interlayer film 132. The hole 132A is shaped as a slit, with the shape substantially matching the shape of a cross-section of the flat harness 3 taken along the direction orthogonal to the longitudinal direction.

Then, as illustrated in FIG. 8D, the other end of the flat harness 3, with the first end connected to the electrically conductive substrate 21, is run through the hole 132A in the inner interlayer film 132. Next, the sheet-shaped inner interlayer film 132 is aligned and layered on the outer interlayer film 131. Here, to ensure there is no slack in the flat harness 3 between the outer interlayer film 131 and the inner interlayer film 132, the flat harness 3 is pulled out from the hole 132A when the two are aligned and layered together. Also, the outer interlayer film 131 and the inner interlayer film 132 are aligned perfectly and layered together to help prevent a gap being formed between the two.

Next, as illustrated in FIG. 8E, the flat harness 3 exposed from the hole 132A of the inner interlayer film 132 is attached to the inner glass sheet 12 using the waterproof tape 4. Here, for example, the flat harness 3 exposed from the hole 132A of the inner interlayer film 132 is run along the surface of the inner interlayer film 132 toward the lower end of the inner interlayer film 132. Then, the waterproof tape 4, which is double-sided tape, is attached to the outer side of the flat harness 3 along the direction the flat harness 3 extends on the inner interlayer film 132. Here, the length of the waterproof tape 4 is adjusted so that the waterproof tape 4 extends just a predetermined distance from the lower end of the inner interlayer film 132 along the direction the flat harness 3 extends. In this state, the release paper of the waterproof tape 4 is peeled off and the adhering surface is exposed. Then, the inner glass sheet 12 is aligned and layered on the inner interlayer film 132. As a result, the third surface T3 and the flat harness 3 are adhered together via the waterproof tape 4. Thereafter, the flat harness 3 is run from the lower end of the third surface T3 toward the fourth surface T4 conforming to the edge surface and then run upward from the lower end of the fourth surface T4 conforming to the fourth surface T4. This adheres the flat harness 3 to the third surface T3, the edge surface between the third surface T3 and the fourth surface T4, and the fourth surface T4 via the waterproof tape 4.

Next, the outer glass sheet 11, the outer interlayer film 131, the inner interlayer film 132, and the inner glass sheet 12 layered in this order are heated under increased pressure in an autoclave. In this way, the outer interlayer film 131 and the inner interlayer film 132 are adhered together and the outer glass sheet 11 and the inner glass are joined together via the interlayer films 131 and 132. In this way, the laminated glass 1 is manufactured. Note that, as in the first embodiment, the two may be temporarily adhered together before heating via the autoclave.

### 3. Modified Examples

Some embodiments of the present invention have been described above. However, the present invention is not limited to the embodiments described above, and various changes can be made without departing from the scope of the present invention. For example, the following changes can be made. Also, the follow modified examples can be combined as appropriate.

### 3-1

The laminated glass of the embodiments described above is applied to the front glass of an automobile. However, the laminated glass may be applied to the rear or side glass of an automobile.

### 3-2

In the embodiments described above, the electrical element supplied with power by the electrically conductive substrate 21 functioning as a power supply point is a heating element (lead wires 20) of the deicer 2. However, a different electrical element may be used. Other examples include a deicing heating element other than a deicer installed in the laminated glass 1, an anti-fogging heating element included in a defogger, an antenna element included in an antenna device, a light control body, and a light-emitting sheet. Also, the heating element may include a film-like heating element made from ITO, FTO, or the like instead of or in addition to the lead wires . The electrical element supplied with power from the flat harness 3 via the electrically conductive substrate 21 may be one or more electrical elements discretionarily selected from among the electrical elements described above and the various other electrical elements able to be installed in the laminated glass 1.

### 3-3

In the embodiments described above, the wiring that is run from the electrically conductive substrate 21 functioning as the power supply point is a flat harness 3. However, the wiring is not limited by this example, and, for example, the wiring may be a round harness or a single or plurality of wires bundled together or not bundled together.

### List of Reference Numerals

1, 101 Laminated glass for automobiles
11 Outer glass sheet
12 Inner glass sheet
13 Interlayer film
13A, 132A Hole
131 Outer interlayer film
132 Inner interlayer film
15 Shielding layer
2 Deicer
20 Heating element (lead wire, electrical element)
21 Electrically conductive substrate (power supply point)
3 Flat harness (wiring)
4 Waterproof tape
5 Electrical element sheet
50 Sheet material
T1 First surface
T2 Second surface
T3 Third surface
T4 Fourth surface

## Claims

1. A laminated glass for automobiles, comprising:
an outer glass sheet including a first surface and a second surface on a vehicle inner side of the first surface;
an inner glass sheet including a third surface and a fourth surface on the vehicle inner side of the third surface;
an interlayer film disposed between the outer glass sheet and the inner glass sheet, the interlayer film joining together the second surface and the third surface;
an electrical element and a power supply point that supplies power to the electrical element disposed on the second surface or inside the interlayer film at or near a peripheral edge portion of the second surface; and
wiring connected to the power supply point, the wiring being run out from the power supply point toward the third surface and extending through the interlayer film.

2. The laminated glass for automobiles according to claim 1, wherein
the wiring is a flat harness.

3. The laminated glass for automobiles according to claim 1 or 2, wherein
a shielding layer is formed in a peripheral edge portion of the second surface and/or the fourth surface,
the interlayer film is in contact with the shielding layer, and
the power supply point is disposed at least partially on the shielding layer.

4. The laminated glass for automobiles according to any one of claims 1 to 3, wherein
the wiring extends through the interlayer film, then continues between the third surface and the interlayer film, and is run out from between the third surface and the interlayer film.

5. The laminated glass for automobiles according to any one of claims 1 to 4, wherein
the wiring extends through the interlayer film at a distance from an edge surface of the interlayer film closest to the power supply point of 3 mm or greater.

6. The laminated glass for automobiles according to any one of claims 1 to 5, wherein
the electrical element includes at least one of a deicing heating element, an anti-fogging heating element, an antenna element, a light control body, or a light-emitting sheet.

7. The laminated glass for automobiles according to any one of claims 1 to 6, wherein
the power supply point and the wiring are connected using soldering and/or electrically conductive tape.

8. The laminated glass for automobiles according to any one of claims 1 to 7, wherein
the power supply point is formed from a material including at least one of Ag, Cu, Sn, Pb, or Bi.

9. The laminated glass for automobiles according to any one of claims 1 to 8, wherein
the wiring is fixed using a waterproof double-sided tape that extends continuously along the third surface, an edge surface between the third surface and the fourth surface, and the fourth surface.

10. The laminated glass for automobiles according to claim 9, wherein
a sum of a thickness of the wiring and a thickness of the waterproof double-sided tape is less than a thickness of the interlayer film at a portion in contact with the second surface and the third surface.

11. A method for manufacturing the laminated glass for automobiles according to any one of claims 1 to 10, the method comprising:
connecting the wiring to the power supply point disposed on the second surface;
forming a hole in the interlayer film;
running the wiring through the hole;
aligning and layering the interlayer film on the outer glass sheet;
attaching the wiring to the third surface using waterproof tape; and
joining together the outer glass sheet and the inner glass sheet via the interlayer film.

12. A method for manufacturing a laminated glass for automobiles including
an outer glass sheet including a first surface and a second surface on a vehicle inner side of the first surface;
an inner glass sheet including a third surface and a fourth surface on the vehicle inner side of the third surface;
an outer interlayer film and an inner interlayer film disposed between the outer glass sheet and the inner glass sheet in this order from the second surface toward the third surface, the outer interlayer film and the inner interlayer film joining together the second surface and the third surface;
an electrical element sheet including an electrical element and a power supply point that supplies power to the electrical element, the electrical element sheet being disposed between the outer interlayer film and the inner interlayer film; and
wiring connectable to the power supply point, the method comprising:
aligning and layering together the outer glass sheet, the outer interlayer film, and the electrical element sheet in this order;
connecting the wiring to the power supply point; forming a hole in the inner interlayer film;
running the wiring through the hole;
aligning and layering the inner interlayer film on the outer interlayer film;
attaching the wiring to the third surface using waterproof tape; and
joining together the outer glass sheet and the inner glass sheet via the outer interlayer film and the inner interlayer film.
